(19) Europäisches Patentamt
European Patent Office
Office européen des brevets

(11) **EP 1 809 691 B1**

(12) **EUROPEAN PATENT SPECIFICATION**

(45) Date of publication and mention
of the grant of the patent:
**14.03.2018 Bulletin 2018/11**

(51) Int Cl.:
*C08K 3/14* (2006.01)  *C08L 67/00* (2006.01)

(21) Application number: **05820957.8**

(86) International application number:
**PCT/US2005/038606**

(22) Date of filing: **27.10.2005**

(87) International publication number:
**WO 2006/055198 (26.05.2006 Gazette 2006/21)**

(54) **POLYESTER POLYMER AND COPOLYMER COMPOSITIONS CONTAINING TITANIUM CARBIDE PARTICLES**

POLYESTERPOLYMER- UND COPOLYMERZUSAMMENSETZUNGEN MIT TITANKARBIDPARTIKELN

COMPOSITIONS POLYMERES ET COPOLYMERES DE POLYESTER CONTENANT DES PARTICULES DE CARBURE DE TITANE

(84) Designated Contracting States:
**AT BE BG CH CY CZ DE DK EE ES FI FR GB GR HU IE IS IT LI LT LU LV MC NL PL PT RO SE SI SK TR**

(30) Priority: **12.11.2004 US 988263**

(43) Date of publication of application:
**25.07.2007 Bulletin 2007/30**

(73) Proprietor: **GRUPO PETROTEMEX, S.A. DE C.V.**
**San Pedro Garza Garcia, Nuevo Leon 66265 (MX)**

(72) Inventor: **XIA, Zhiyong**
**Kingsport, TN 37660 (US)**

(74) Representative: **Tostmann, Holger Carl et al**
**Wallinger Ricker Schlotter Tostmann**
**Patent- und Rechtsanwälte Partnerschaft mbB**
**Zweibrückenstrasse 5-7**
**80331 München (DE)**

(56) References cited:
**WO-A-96/03163**

• **DATABASE WPI Section Ch, Week 199436 Derwent Publications Ltd., London, GB; Class A28, AN 1994-288389 XP002373695 & JP 06 215618 A (TOKAI CARBON KK) 5 August 1994 (1994-08-05)**
• **DATABASE WPI Section Ch, Week 198845 Derwent Publications Ltd., London, GB; Class A85, AN 1988-319608 XP002373696 & JP 63 237207 A (UBE IND LTD) 3 October 1988 (1988-10-03)**

**Description**

FIELD OF THE INVENTION

The invention relates to polyester compositions that are useful in packaging, such as in the manufacture of beverage containers by reheat blow molding, or other hot forming processes in which polyester is reheated. The compositions exhibit improved reheat, while maintaining acceptable visual appearance, such as clarity and color.

BACKGROUND OF THE INVENTION

Many plastic packages, such as those made from poly(ethylene terephthalate) (PET) and used in beverage containers, are formed by reheat blow-molding, or other operations that require heat softening of the polymer.

In reheat blow-molding, bottle preforms, which are test-tube shaped extrusion moldings, are heated above the glass transition temperature of the polymer, and then positioned in a bottle mold to receive pressurized air through their open end. This technology is well known in the art, as shown, for example in U.S. Pat. No. 3,733,309. In a typical blow-molding operation, radiation energy from quartz infrared heaters is generally used to reheat the preforms.

In the preparation of packaging containers using operations that require heat softening of the polymer, the reheat time, or the time required for the preform to reach the proper temperature for stretch blow molding (also called the heat-up time), affects both the productivity and the energy required. As processing equipment has improved, it has become possible to produce more units per unit time. Thus it is desirable to provide polyester compositions which provide improved reheat properties, by reheating faster (increased reheat rate), or with less reheat energy (increased reheat efficiency), or both, compared to conventional polyester compositions.

The aforementioned reheat properties vary with the absorption characteristics of the polymer itself. Heat lamps used for reheating polymer preforms are typically infrared heaters, such as quartz infrared lamps, having a broad light emission spectrum, with wavelengths ranging from about 500 nm to greater than 1,500 nm. However, polyesters, especially PET, absorb poorly in the region from 500 nm to 1,500 nm. Thus, in order to maximize energy absorption from the lamps and increase the preform's reheat rate, materials that will increase infrared energy absorption are sometimes added to PET. Unfortunately, these materials tend to have a negative effect on the visual appearance of PET containers, for example increasing the haze level and/or causing the article to have a dark appearance. Further, since compounds with absorbance in the range of 400-700 nm appear colored to the human eye, materials that absorb in this wavelength range will impart color to the polymer.

A variety of black and gray body absorbing compounds have been used as reheat agents to improve the reheat characteristics of polyester preforms under reheat lamps. These reheat additives include carbon black, graphite, antimony metal, black iron oxide, red iron oxide, inert iron compounds, spinel pigments, and infrared absorbing dyes. The amount of absorbing compound that can be added to a polymer is limited by its impact on the visual properties of the polymer, such as brightness, which may be expressed as an L* value, and color, which is measured and expressed as an a* value and a b* value, as further described below.

To retain an acceptable level of brightness and color in the preform and resulting blown articles, the quantity of reheat additive may be decreased, which in turn decreases reheat rates. Thus, the type and amount of reheat additive added to a polyester resin may be adjusted to strike the desired balance between increasing the reheat rate and retaining acceptable brightness and color levels. It would be ideal to simultaneously increase the reheat rate and decrease the rate at which color and brightness degrade as the concentration of the reheat additive in a thermoplastic composition is increased.

A further disadvantage of some conventional reheat additives known in the art Is their instability during the PET manufacturing process. For example, antimony metal is known to re-oxidize to antimony oxide (which is ineffective at increasing reheat rate) if there are oxygen leaks in the melt-phase or solid-stating manufacturing processes. This results in variability in the heat-up rates of preforms in the reheat blow molding process and thus requires constant adjustments of the infrared lamp settings. It would be an advance in the art to provide a reheat additive that provides satisfactory reheat while maintaining acceptable color and clarity, and that is stable to oxidation during the melt-phase and solid-stating manufacturing processes.

There remains a need in the art for polyester compositions containing reheat additives that improve reheat without the problems associated with known reheat additives, such as re-oxidation and inconsistent reheat, while providing improved brightness, clarity, and color.

WO 96/03163 from the field of intravascular catheters discloses a polyester matrix which includes a finely divided lubricous particulate filler, which may comprise, among others, graphite, molybdenum, disulfide, TiC, MoC, graphite difluoride or fluoropolymers. A polysiloxane fluid may also be incorporated within this matrix along with the lubricous particulate matter.

JP 06-215618 relates to a process for the manufacture of an electro-conductive resin comprising said matrix resin and TiC whiskers dispersed within said resin matrix. The TiC whiskers have a diameter of 0.3 to 2.0 $\mu$m and a length of 5 to 50 $\mu$m. The content of the TiC whiskers in the matrix resin is from 5 to 35% by volume.

JP 63-237207 discloses a macromolecular moulding substrate containing carbon and metal carbide, wherein Co, Cr and W are sputtered on the substrate to form a vertical recording medium composed of Co-Cr-W-C alloy as a film. The metal carbide preferably comprises titanium carbide, silicon carbide, aluminum carbide, zirconium carbide, chrome carbide, among others.

SUMMARY OF THE INVENTION

The invention relates to polyester compositions in accordance with claim 1 that comprise polyester polymers or copolymers, and especially thermoplastic polyester polymers or copolymers, having incorporated therein titanium carbide particles that improve the reheat properties of the compositions. The titanium carbide particles may be incorporated in the polyester by melt compounding, or may be added at any stage of the polymerization, such as during the melt-phase of the polymerization. A range of particle sizes may be used, as well as a range of particle size distributions.

The polyester compositions according to the invention are suitable for use in packaging in which a reheat step is desirable or necessary, and are provided with titanium carbide particles in an amount sufficient to improve the reheat efficiency. These compositions may be provided as a melt, in solid form, as preforms such as for blow molding, as sheets suitable for thermoforming, as concentrates, and as bottles, the compositions comprising a polyester polymer, with titanium carbide particles dispersed in the polyester. Suitable polyesters include polyalkylene terephthalates and polyalkylene naphthalates.

The invention relates also to a process according to claim 21 for the manufacture of polyester compositions in which titanium carbide particles may be added to any stage of a polyester polymerization process, such as during the melt phase for the manufacture of polyester polymers. The titanium carbide particles may also be added to the polyester polymer which is in the form of solid-stated pellets, or to an injection molding machine for the manufacture of preforms from the polyester polymers.

BRIEF DESCRIPTION OF THE DRAWINGS

Fig. 1 depicts the correlation between titanium carbide particle concentration and twenty-ounce bottle preform reheat improvement temperature (RIT).

Fig. 2 depicts the correlation between titanium carbide particle concentration and twenty-ounce bottle preform L* value.

Fig. 3 depicts the correlation between titanium carbide particle concentration and twenty-ounce bottle preform a* value.

Fig. 4 depicts the correlation between titanium carbide particle concentration and twenty-ounce bottle preform b* value.

DETAILED DESCRIPTION OF THE INVENTION

The present invention may be understood more readily by reference to the following detailed description of the invention, including the appended figures, and to the examples provided. It is to be understood that this invention is not limited to the specific processes and conditions described, because specific processes and process conditions for processing plastic articles may vary. It is also to be understood that the terminology used is for the purpose of describing particular embodiments only and is not intended to be limiting.

As used in the specification and the claims, the singular forms "a," "an," and "the" include plural referents unless the context clearly dictates otherwise. For example, reference to processing a thermoplastic "preform," "container" or "bottle" is intended to include the processing of a plurality of thermoplastic preforms, articles, containers, or bottles.

By "comprising" or "containing" we mean that at least the named compound, element, particle, etc. must be present in the composition or article, but does not exclude the presence of other compounds, materials, particles, etc., even if the other such compounds, material, particles, etc. have the same function as what is named.

As used herein, a "$d_{50}$ particle size" is the median diameter, where 50% of the volume is composed of particles larger than the stated $d_{50}$ value, and 50% of the volume is composed of particles smaller than the stated $d_{50}$ value. As used herein, the median particle size is the same as the $d_{50}$ particle size.

According to the invention, titanium carbide particles are used to improve the reheat properties of the polyester compositions in which they are distributed. Titanium carbide is commonly considered to be a compound of titanium and carbon in which there is approximately a one-to-one correspondence between titanium atoms and carbon atoms. However, it is known in the art of metallurgy that titanium carbide has a face centered cubic structure in which the carbon atoms are considered to occupy the octahedral interstices in a slightly expanded cubic, close-packed arrangement of titanium atoms, and that the compounds are stable over a wide range of anion or cation deficiencies, for example from about $TiC_{0.47}$ to about $TiC_{1.0}$, all of which compounds are intended to fall within the scope of the invention. Indeed, so long as the particles according to the invention predominantly comprise titanium carbide, by weight, the remainder of the particles may well be elemental titanium, or titanium with small amounts of carbon dissolved, such that the average amount of carbon in the particles may, by weight, be even lower than that stated in the formulas.

Titanium carbide particles useful according to the claimed invention may comprise significant amounts of titanium nitride and/or titanium oxide, so long as the titanium carbide particles are comprised predominantly of titanium carbide, based on atom%, or so long as the total amount of titanium nitride and titanium carbide is at least 50 wt.%, for example.

Titanium carbide compounds useful according to the claimed invention are further described in Kirk-Othmer Encyclopedia of Chemical Technology, Vol 24, 4th ed., (1997) pp. 225 - 349, and especially pp. 228 - 231, the relevant portions of which are incorporated herein by reference.

Titanium carbide particles useful according to the claimed invention may be distinguished from other titanium compounds, such as those used as condensation catalysts, for example titanium alkoxides or simple chelates. That is, if titanium compounds are used as condensation catalysts to form the polymer in the compositions of the claimed invention, such polymers will additionally contain titanium carbide particles, as further described herein. Titanium carbide particles useful according to the invention may also be distinguished from elemental titanium and titanium alloys, as further described in Kirk-Othmer Encyclopedia of Chemical Technology, Vol. 24, 4th ed., (1997) pp. 186 - 224, although the invention does not exclude the presence of elemental titanium or titanium alloys in the titanium carbide particles, so long as the particles are comprised predominantly of titanium carbide, as already described.

Titanium carbide particles useful according to the invention for the improvement of reheat and color in polyester compositions include those having a range of particle sizes and particle size distributions, although we have found certain particle sizes and relatively narrow particle size distributions to be especially suitable in certain applications. For example, in some embodiments, especially those in which the polyester comprises PET, titanium carbide particles having a median particle size of about 0.65 micrometers ($\mu$m), and a relatively narrow particle size distribution, are advantageous.

The titanium carbide particles according to the claimed invention may include one or more other metals or impurities, so long as the particles are comprised predominantly of titanium carbide. Metals or non-metals that may be present in minor amounts up to a total of 50 wt.% include aluminum, boron, tin, zirconium, manganese, germanium, iron, chromium, tungsten, molybdenum, vanadium, palladium, ruthenium, niobium, tantalum, cobalt, nickel, copper, gold, silver, silicon, and hydrogen, as well as nitrogen and oxygen, as already described.

Not wishing to be bound by any theory, we believe that the effectiveness of titanium carbide as a reheat additive may be a function of the absorptive properties of the titanium carbide, so that titanium carbides containing minor amounts of other materials are suitable for use according to the invention so long as the particles are predominantly comprised of titanium carbide. Thus, the titanium carbide particles may comprise at least 50 wt.% titanium carbide, or at least 75 wt.% titanium carbide, or at least 90 wt.% titanium carbide, or at least 95 wt.% titanium carbide.

The titanium carbide particles may thus include elemental titanium, or may include other materials, such as other metals, so long as such other materials do not substantially affect the ability of the titanium carbide particles to increase the reheat properties of the polymer compositions.

The titanium carbide particles may be coated with a fine layer of titanium oxide, and are useful according to the invention so long as the oxide coating does not substantially affect the ability of the titanium carbide particles to increase the reheat efficiency of the polymer compositions.

The particles may likewise be titanium carbide hollow spheres or titanium carbide-coated spheres, in which the core may be comprised of titanium carbide, of mixtures of titanium carbide with other materials, or of other materials in the substantial absence of titanium carbide. Again, not wishing to be bound by any theory, we think it likely that the effectiveness of titanium carbide as a reheat additive is a function of the absorptive properties of the titanium carbide, so that titanium carbide-coated particles are suitable for use according to the invention, so long as the coating thickness of titanium carbide is sufficient to provide adequate reheat properties. Thus, in various embodiments, the thickness of the coating may be from about 0.005 $\mu$m to about 10 $\mu$m, or from 0.01 $\mu$m to 5 $\mu$m, or from 0.10 $\mu$m to 0.5 $\mu$m. Such titanium carbide coatings may also comprise amounts of other materials, as already described.

The amount of titanium carbide particles present in the polyester compositions according to the invention varies within a range, in accordance with claim 1, from 0.5 ppm to 1000 ppm, or from 1 ppm to 500 ppm, or from 5 ppm to 100 ppm, or from 5 ppm to 50 ppm. Thermoplastic concentrates according to the invention may, of course, have amounts greater than these, as further described elsewhere herein.

We note that titanium carbide particles can be produced by numerous techniques, such as by reacting the metal or oxide of titanium with carbon. Further details are described in the Powder Metallurgy entry in Kirk-Othmer Encyclopedia of Chemical Technology, Vol 16, 4th ed., (1995) pp. 353 - 392, incorporated herein by reference. The titanium carbide particles according to the invention may thus be produced by any known means, without limitation.

Shapes of titanium carbide powder which can be used in this invention include, but are not limited to, the following: acicular powder, angular powder, dendritic powder, equi-axed powder, flake powder, fragmented powder, granular powder, irregular powder, nodular powder, platelet powder, porous powder, rounded powder, and spherical powder. The particles may be of a filamentary structure, where the individual particles may be loose aggregates of smaller particles attached to form a bead or chain-like structure. The overall size of the particles may be variable, due to a variation in chain length and degree of branching.

The size of the titanium carbide particles may thus vary within a broad range depending on the method of production, and the numerical values for the particle sizes may vary according to the shape of the particles and the method of measurement. Particle sizes according to the invention are from 0.005 $\mu$m to 100 $\mu$m, or from 0.01 $\mu$m to 45 $\mu$m, or from 0.01 $\mu$m to 10 $\mu$m, or from 0.01 $\mu$m to 5 $\mu$m. When the polyester composition comprises PET, we have found that particle sizes from 0.01 $\mu$m to 5 $\mu$m are especially suitable.

The titanium carbide particles, which have a mean particle size suitable for the invention, may have irregular shapes and form chain-like structures, although roughly spherical particles may be preferred. The particle size and particle size distribution may be measured by methods such as those described in the Size Measurement of Particles entry of Kirk-Othmer Encyclopedia of Chemical Technology, Vol. 22, 4th ed., (1997) pp. 256 - 278. For example, particle size and particle size distributions may be determined using a Fisher Subsieve Sizer or a Microtrac Particle-Size Analyzer manufactured by Leeds and Northrop Company, or by microscopic techniques, such as scanning electron microscopy or transmission electron microscopy.

A range of particle size distributions may be useful according to the invention. The particle size distribution, as used herein, may be expressed by "span (**S**)," where **S** is calculated by the following equation:

$$S = \frac{d_{90} - d_{10}}{d_{50}}$$

where $d_{90}$ represents a particle size in which 90% of the volume is composed of particles smaller than the stated $d_{90}$; and $d_{10}$ represents a particle size in which 10% of the volume is composed of particles smaller than the stated $d_{10}$; and $d_{50}$ represents a particle size in which 50% of the volume is composed of particles larger than the stated $d_{50}$ value, and 50% of the volume is composed of particles smaller than the stated $d_{50}$ value.

Thus, particle size distributions in which the span (S) is from 0 to 10, or from 0 to 5, or from 0.01 to 2, for example, may be used according to the invention.

In order to obtain a good dispersion of titanium carbide particles in the polyester compositions, a concentrate, containing for example 500 ppm to 1000 ppm titanium carbide particles, may be prepared using a polyester such as a commercial grade of PET. The concentrate may then be let down into a polyester at the desired concentration, ranging, for example, from 1 ppm to 500 ppm, or as described elsewhere herein.

Due to the properties of titanium carbide, we expect that the polyester compositions of this invention which contain titanium carbide particles as a reheat additive do not suffer from the problem of re-oxidation in the presence of an oxygen leak during solid-stating, as is the case with antimony metal particles mentioned earlier. Thus, the reheat rate will tend to be less variable with titanium carbide particles, and fewer adjustments will need to be made to the lamp settings during the reheat blow molding process.

The amount of titanium carbide particles used in the polyester will depend upon the particular application, the desired reduction in reheat time, and the toleration level in the reduction of a* and b* away from zero along with the movement of L* brightness values away from 100. Thus, in various embodiments, the quantity of titanium carbide particles may be at least 0.5 ppm, or at least 1 ppm, or at least 5 ppm. In many applications, the quantity of titanium carbide particles may be at least 50 ppm, in some cases at least 60 ppm, and even at least 70 ppm. The maximum amount of titanium carbide particles may be limited by one or more of the desired reheat rate, or maintenance in L*, a*, b* and other color properties, which may vary among applications or customer requirements. In some embodiments, the amount may not exceed 500 ppm, or may be at or below 300 ppm, or may not exceed 250 ppm. In those applications where color, haze, and brightness are not important features to the application, however, the amount of titanium carbide particles used may be up to 1,000 ppm, or up to 5,000 ppm, or even up to 10,000 ppm. The amount can even exceed 10,000 ppm when formulating a concentrate with titanium carbide particles as discussed elsewhere herein.

The method by which the titanium carbide particles are incorporated into the polyester composition is not limited. The titanium carbide particles can be added to the polymer reactant system, during or after polymerization, to the polymer melt, or to the molding powder or pellets or molten polyester in the injection-molding machine from which the bottle preforms are made. They may be added at locations including, but not limited to, proximate the inlet to the esterification reactor, proximate the outlet of the esterification reactor, at a point between the inlet and the outlet of the esterification reactor, anywhere along the recirculation loop, proximate the inlet to the prepolymer reactor, proximate the outlet to the prepolymer reactor, at a point between the inlet and the outlet of the prepolymer reactor, proximate the inlet to the polycondensation reactor, or at a point between the inlet and the outlet of the polycondensation reactor.

The titanium carbide particles may be added to a polyester polymer, such as PET, and fed to an injection molding machine by any method, including feeding the titanium carbide particles to the molten polymer in the injection molding machine, or by combining the titanium carbide particles with a feed of PET to the injection molding machine, either by melt blending or by dry blending pellets.

Alternatively, the titanium carbide particles may be added to an esterification reactor, such as with and through the ethylene glycol feed optionally combined with phosphoric acid, to a prepolymer reactor, to a polycondensation reactor, or to solid pellets in a reactor for solid stating, or at any point in-between any of these stages. In each of these cases, the titanium carbide particles may be combined with PET or its precursors neat, as a concentrate containing PET, or diluted with a carrier. The carrier may be reactive to PET or may be non-reactive. The titanium carbide particles, whether neat or in a concentrate or in a carrier, and the bulk polyester, may be dried prior to mixing together. These may be dried in an atmosphere of dried air or other inert gas, such as nitrogen, and if desired, under subatmospheric pressure.

The impact of a reheat additive on the color of the polymer can be judged using a tristimulus color scale, such as the CIE L*a*b* scale. The L* value ranges from 0 to 100 and measures dark to light. The a* value measures red to green with positive values being red and negative values green. The b* value measures yellow to blue with yellow having positive values and blue negative values.

Color measurement theory and practice are discussed in greater detail in Principles of Color Technology, pp.25-66 by Fred W. Billmeyer, Jr., John Wiley & Sons, New York (1981).

L* values for the polyester compositions as measured on twenty-ounce bottle preforms discussed herein should generally be greater than 60.0, more preferably at least 65.0, and more preferably yet at least 70.0. Specifying a particular L* brightness does not imply that a preform having a particular sidewall cross-sectional thickness is actually used, but only that in the event the L* is measured, the polyester composition actually used is, for purposes of testing and evaluating the L* of the composition, injection molded to make a preform having a thickness of 0,4 cm (0.154 inches).

The color of a desirable polyester composition, as measured in twenty-ounce bottle preforms having a nominal sidewall cross-sectional thickness of 0.154 inches, is generally indicated by an a* coordinate value preferably ranging from about minus 1.9 to about plus 0.5 or from about minus 1.5 to about plus 0.1. With respect to a b* coordinate value, it is generally desired to make a bottle preform having a b* value coordinate ranging from minus 3.0, or from minus 0.1 to a positive value of less than plus 5.0, or less than plus 4.0, or less than plus 3.8, or less than 2.6.

The measurements of L*, a* and b* color values are conducted according to the following method. The instrument used for measuring b* color should have the capabilities of a HunterLab UltraScan XE, model U3350, using the CIE Lab Scale (L*, a*, b*), D65 (ASTM) illuminant, 10° observer and an integrating sphere geometry. Clear plaques, films, preforms, bottles, and are tested in the transmission mode under ASTM D1746 "Standard Test Method for Transparency of Plastic Sheeting." The instrument for measuring color is set up under ASTM E1164 "Standard Practice for Obtaining Spectrophotometric Data for Object-Color Evaluation."

More particularly, the following test methods can be used, depending upon whether the sample is a preform, or a bottle. Color measurements should be performed using a HunterLab UltraScan XE (Hunter Associates Laboratory, Inc., Reston VA), which employs diffuse/8° (illumination/view angle) sphere optical geometry, or equivalent equipment with these same basic capabilities. The color scale employed is the CIE L*a*b* scale with D65 illuminant and 10° observer specified.

Preforms having a mean outer diameter of 2.14 cm (0.846 inches) and a wall thickness of 0.4 cm (0.154 inches) are measured in regular transmission mode using ASTM D1746, "Standard Test Method for Transparency of Plastic Sheeting". Preforms are held in place in the instrument using a preform holder, available from HunterLab, and triplicate measurements are averaged, whereby the sample is rotated 90° about its center axis between each measurement.

The intrinsic viscosity (It.V.) values described throughout this description are set forth in dL/g unit as calculated from the inherent viscosity (Ih.V.) measured at 25°C in 60/40 wt/wt phenol/tetrachloroethane. The inherent viscosity is calculated from the measured solution viscosity. The following equations describe these solution viscosity measurements, and subsequent calculations to Ih.V. and from Ih.V. to It.V:

$$\eta_{inh} = [\ln (t_s/t_o)]/C$$

where $\eta_{inh}$ = Inherent viscosity at 25°C at a polymer concentration of 0.50 g/100 mL of 60% phenol and 40% 1,1,2,2-tetrachloroethane

ln = Natural logarithm

$t_s$ = Sample flow time through a capillary tube

$t_o$ = Solvent-blank flow time through a capillary tube

C = Concentration of polymer in grams per 100 mL of solvent (0.50%)

The intrinsic viscosity is the limiting value at infinite dilution of the specific viscosity of a polymer. It is defined by the following equation:

$$\eta_{int} = \lim_{C \to 0} (\eta_{sp}/C) = \lim_{C \to 0} \ln (\eta_r/C)$$

where $\eta_{int}$ = Intrinsic viscosity

$\eta_r$ = Relative viscosity = ts/to

$\eta_{sp}$ = Specific viscosity = $\eta_r$ - 1

Instrument calibration involves replicate testing of a standard reference material and then applying appropriate mathematical equations to produce the "accepted" I.V. values.

$$\text{Calibration Factor} = \text{Accepted IV of Reference Material} / \text{Average of Replicate Determinations}$$

$$\text{Corrected IhV} = \text{Calculated IhV} \times \text{Calibration Factor}$$

The intrinsic viscosity (It.V. or $\eta_{int}$) may be estimated using the Billmeyer equation as follows:

$$\eta_{int} = 0.5 \left[ e^{0.5 \times \text{Corrected IhV}} - 1 \right] + (0.75 \times \text{Corrected IhV})$$

Thus, a beneficial feature provided by polyester compositions containing titanium nitride particles is that the compositions and preforms made from these compositions have an improved reheat rate, expressed as a twenty-ounce bottle preform Reheat Improvement Temperature (RIT), relative to a control sample with no reheat additive.

The following test for RIT is used herein, in order to determine the reheat rate, or RIT, of the compositions described and claimed. Twenty-ounces preforms (with an outer diameter of 2.14 cm (0.846 inches) and a sidewall cross-sectional thickness of 0.4 cm (0.154 inches) are run through the oven bank of a Sidel SBO2/3 blow molding unit. The lamp settings for the Sidel blow molding unit are shown in Table 1. The preform heating time in the heaters is 38 seconds, and the power output to the quartz infrared heaters is set at 64%.

**TABLE 1.** Sidel SBO2/3 lamp settings.

| Heating zone | Lamps ON=1 OFF=0 | | | |
|---|---|---|---|---|
| | Lamp power setting (%) | Heater 1 | Heater 2 | Heater 3 |
| Zone 8 | | | | |
| zone 7 | | | | |
| Zone 6 | | | | |
| Zone 5 | 90 | 1 | 0 | 1 |
| Zone 4 | 90 | 1 | 0 | 1 |
| Zone 3 | 90 | 1 | 0 | 1 |
| Zone 2 | 90 | 1 | 0 | 1 |
| Zone 1 | 90 | 1 | 1 | 1 |

In the test, a series of five twenty-ounce bottle preforms is passed in front of the quartz infrared heaters and the preform surface temperature is measured. All preforms are tested in a consistent manner. The preform reheat improvement temperature (RIT) is then calculated by comparing the difference in preform surface temperature of the target samples containing a reheat additive with that of the same polymer having no reheat additive. The higher the RIT value, the higher the reheat rate of the composition.

Thus, in various embodiments, the twenty-ounce bottle preform reheat improvement temperature (RIT) of the polyester compositions according to the invention containing titanium carbide particles, may be from about 0.1 °C to about 5°C, or from 5°C to 9°C.

In some embodiments, the polyester compositions containing titanium carbide particles, and preforms made from these compositions, may have a b* color of less than 4.0, or less than 3.8, or less than 3.0, and in any case greater than minus 0. Similarly, preforms from the polyester compositions according to the invention may have an L* brightness of at least 60, or at least 65, or at least 70.

We note that the polyester compositions according to the invention may have improved solid-stating stability compared to polyester compositions containing conventional reheat additives. By solid-stating stability we mean that there is little or no change in the reheat rate after the polymer undergoes solid-state polymerization in the presence of an air leak during the process. Constant reheat rate is important for the bottle blowing process. If the reheat rate varies as a result of the oxidation of the reheat additive, as is the case with antimony metal, then constant adjustments must be made to the oven power settings in order to maintain a consistent preform surface temperature from one preform to another.

According to the invention, in various embodiments, there are thus provided concentrate compositions comprising titanium carbide particles in an amount of at least 0.05 wt.%, or at least 2 wt.%, and up to about 20 wt.%, or up to 35 wt.%, and a thermoplastic polymer normally solid at 25°C and 1 atm such as a polyester, polyolefin, or polycarbonate in an amount of at least 65 wt.%, or at least 80 wt.%, or up to 99 wt.% or more, each based on the weight of the concentrate composition. The concentrate may be in liquid, molten state, or solid form. The converter of polymer to preforms has the flexibility of adding titanium carbide particles to bulk polyester at the injection molding stage continuously, or intermittently, in liquid molten form or as a solid blend, and further adjusting the amount of titanium carbide particles contained in the preform by metering the amount of concentrate to fit the end use application and customer requirements.

The concentrate may be made by mixing titanium carbide particles with a polymer such as a polycarbonate, a polyester, a polyolefin, or mixtures of these, in a single or twin-screw extruder, and optionally compounding with other reheat additives. A suitable polycarbonate is bisphenol A polycarbonate. Suitable polyolefins include, but not limited to, polyethylene and polypropylene, and copolymers thereof. Melt temperatures should be at least as high as the melting point of the polymer. For a polyester, such as PET, the melt temperatures are typically in the range of 250°-310°C. Preferably, the melt compounding temperature is maintained as low as possible. The extrudate may be withdrawn in any form, such as a strand form, and recovered according to the usual way such as cutting.

The concentrate may be prepared in a similar polyester as used in the final article. However, in some cases it may be advantageous to use another polymer in the concentrate, such as a polyolefin. In the case where a polyolefin/titanium carbide particle concentrate is blended with the polyester, the polyolefin can be incorporated as a nucleator additive for the bulk polyester.

The concentrate may be added to a bulk polyester or anywhere along the different stages for manufacturing PET, in a manner such that the concentrate is compatible with the bulk polyester or its precursors. For example, the point of addition or the It.V. of the concentrate may be chosen such that the It.V. of the polyethylene terephthalate and the It.V. of the concentrate are similar, e.g. +/- 0.2 It.V. measured at 25°C in a 60/40 wt/wt phenol/tetrachloroethane solution. A concentrate can be made with an It.V. ranging from 0.3 dUg to 1.1 dL/g to match the typical It.V. of a polyethylene terephthalate under manufacture in the polycondensation stage. Alternatively, a concentrate can be made with an It.V. similar to that of solid-stated pellets used at the injection molding stage (e.g. It.V. from 0.6 dL/g to 1.1 dL/g).

Other components can be added to the polymer compositions of the present invention to enhance the performance properties of the polyester composition. For example, crystallization aids, impact modifiers, surface lubricants, denesting agents, stabilizers, antioxidants, ultraviolet light absorbing agents, catalyst deactivators, colorants, nucleating agents, acetaldehyde reducing compounds, other reheat enhancing aids, fillers, anti-abrasion additives, and the like can be included. The resin may also contain small amounts of branching agents such as trifunctional or tetrafunctional comonomers such as trimellitic anhydride, trimethylol propane, pyromellitic dianhydride, pentaerythritol, and other polyester forming polyacids or polyols generally known in the art. All of these additives and many others and their use are well known in the art. Any of these compounds can be used in the present composition.

The polyester compositions of the present invention may be used to form preforms used for preparing packaging containers. The preform is typically heated above the glass transition temperature of the polymer composition by passing the preform through a bank of quartz infrared heating lamps, positioning the preform in a bottle mold, and then blowing pressurized air through the open end of the mold.

A variety of other articles can be made from the polyester compositions of the invention. Articles include sheet, film, bottles, trays, other packaging, rods, tubes, lids, and injection molded articles. Any type of bottle can be made from the polyester compositions of the invention. Thus, in one embodiment, there is provided a beverage bottle made from PET suitable for holding water. In another embodiment, there is provided a heat-set beverage bottle suitable for holding beverages which are hot-filled into the bottle. In yet another embodiment, the bottle is suitable for holding carbonated soft drinks.

The titanium carbide particle reheat additives used in the invention affect the reheat rate, brightness and color of the modeled articles (preforms). Any one or more of these performance characteristics may be adjusted by varying the amount of reheat additive used, or by changing the particle size, or the particle size distribution.

The invention also provides processes for making polyester preforms that comprise feeding a liquid or solid bulk polyester and a liquid, molten or solid polyester concentrate composition to a machine for manufacturing the preform, the concentrate being as described elsewhere herein. According to the invention, not only may the concentrate be added at the stage for making preforms, but in other embodiments, there are provided processes for the manufacture of polyester compositions that comprise adding a concentrate polyester composition to a melt phase for the manufacture of virgin polyester polymers, the concentrate comprising titanium carbide particles and at least 65 wt.% of a polyester polymer. Alternatively, the titanium carbide particles may be added to recycled PET.

The polyester compositions according to the invention have a good reheat rate with acceptable color properties. The resulting polymers may also have excellent solid stating stability.

In yet another embodiment of the invention, there is provided a polyester beverage bottle made from a preform, wherein the preform has a RIT of 5°C or more, and an L* value of 60 or more.

In each of the described embodiments, there are also provided additional embodiments encompassing the processes for the manufacture of each, and the preforms and articles, and in particular bottles, blow-molded from the preforms, as well as their compositions containing titanium carbide particles.

The polyester compositions of this invention may be any thermoplastic polymers, optionally containing any number of ingredients in any amounts, provided that the polyester component of the polymer is present in an amount of at least 30 wt.%, or at least 50 wt.%, or at least 80 wt.%, or even 90 wt.% or more, based on the weight of the polymer, the backbone of the polymer typically including repeating terephthalate or naphthalate units.

Examples of suitable polyester polymers include one or more of: PET, polyethylene naphthalate (PEN), poly(1,4-cyclo-hexylenedimethylene) terephthalate (PCT), poly(ethylene-co-1,4-cyclohexanedimethylene terephthalate) (PETG), copoly(1,4-cyclohexylene dimethylene/ethylene terephthalate) (PCTG), and their blends or their copolymers. The form of the polyester composition is not limited, and includes a melt in the manufacturing process or in the molten state after polymerization, such as may be found in an injection molding machine, and in the form of a liquid, pellets, preforms, and/or bottles. Polyester pellets may be isolated as a solid at 25°C and 1 atm in order for ease of transport and processing. The shape of the polyester pellet is not limited, and is typified by regular or irregular shaped discrete particles and may be distinguished from a sheet, film, or fiber.

It should also be understood that as used herein, the term polyester is intended to include polyester derivatives, including, but not limited to, polyether esters, polyester amides, and polyetherester amides. Therefore, for simplicity, throughout the specification and claims, the terms polyester, polyether ester, polyester amide, and polyetherester amide may be used interchangeably and are typically referred to as polyester, but it is understood that the particular polyester species is dependant on the starting materials, i.e., polyester precursor reactants and/or components. The location of the titanium carbide particles within the polyester compositions is not limited. The titanium carbide particles may be disposed anywhere on or within the polyester polymer, pellet, preform, or bottle. Preferably, the polyester polymer in the form of a pellet forms a continuous phase. By being distributed "within" the continuous phase we mean that the titanium carbide particles are found at least within a portion of a cross-sectional cut of the pellet. The titanium carbide particles may be distributed within the polyester polymer randomly, distributed within discrete regions, or distributed only within a portion of the polymer. In a preferred embodiment, the titanium carbide particles are disposed randomly throughout the polyester polymer composition as by way of adding the titanium carbide particles to a melt, or by mixing the titanium carbide particles with a solid polyester composition followed by melting and mixing.

The titanium carbide particles may be added in an amount so as to achieve a twenty-ounce bottle preform RIT of at least 3°C, or at least 5°C, or at least 9°C, while maintaining acceptable preform color properties.

Suitable amounts of titanium carbide particles in the polyester compositions (other than polyester concentrate compositions as discussed elsewhere), preforms, and containers, may thus range from 0.5 ppm to 500 ppm, based on the weight of the polymer in the polyester compositions, or as already described. The amount of the titanium carbide particles used may depend on the type and quality of the titanium carbide particles, the particle size, surface area, the morphology of the particle, and the level of reheat rate improvement desired.

The particle size may be measured with a laser diffraction type particle size distribution meter, or scanning or transmission electron microscopy methods. Alternatively, the particle size can be correlated by a percentage of particles screened through a mesh. Titanium carbide particles having a particle size distribution in which at least 80%, preferably at least 90%, more preferably at least 95% of the particles fall through an ASTM-E11 140 sieve are suitable for use as reheat agents. Titanium carbide particles having a particle size distribution in which at least 80%, preferably at least 90%, more preferably at least 95% of the particles fall through a ASTM-E11 325 sieve are also suitable for use as reheat agents.

The titanium carbide particles used in the invention not only enhance the reheat rate of a preform, but have only a minimal impact on the brightness of the preforms and bottles by not reducing the L* below acceptable levels.

In various other embodiments, there are provided polyester compositions, whether in the form of a melt, pellets, sheets, preforms, and/or bottles, comprising at least 0.5 ppm, or at least 50 ppm, or at least 100 ppm titanium carbide particles, having a $d_{50}$ particle size of less than 100 $\mu$m, or less than 50 $\mu$m, or less than 1 $\mu$m or less, wherein the polyester compositions have a preform L* value of 70 or more and an RIT of at least 5°C.

According to various embodiments of the invention, titanium carbide particles may be added at any point during polymerization, which includes to the esterification zone, to the polycondensation zone comprised of the prepolymer zone and the finishing zone, to or prior to the pelletizing zone, and at any point between or among these zones. The titanium carbide particles may also be added to solid-stated pellets as they are exiting the solid-stating reactor. Furthermore, titanium carbide particles may be added to the PET pellets in combination with other feeds to the injection molding machine, or may be fed separately to the injection molding machine. For clarification, the titanium carbide particles may be added in the melt phase or to an injection molding machine without solidifying and isolating the polyester composition into pellets. Thus, the titanium carbide particles can also be added in a melt-to-mold process at any point in the process for making the preforms. In each instance at a point of addition, the titanium carbide particles can be added as a powder neat, or in a liquid, or a polymer concentrate, and can be added to virgin or recycled PET, or added as a polymer concentrate using virgin or recycled PET as the PET polymer carrier.

In other embodiments, the invention relates to processes for the manufacture of polyester compositions containing titanium carbide particles, such as polyalkylene terephthalate or naphthalate polymers made by transesterifying a dialkyl terephthalate or dialkyl naphthalate or by directly esterifying terephthalic acid or naphthalene dicarboxylic acid.

Thus, there are provided processes for making polyalkylene terephthalate or naphthalate polymer compositions by transesterifying a dialkyl terephthalate or naphthalate or directly esterifying a terephthalic acid or naphthalene dicarboxylic acid with a diol, adding titanium carbide particles to the melt phase for the production of a polyalkylene terephthalate or naphthalate after the prepolymer zone, or to polyalkylene terephthalate or naphthalate solids, or to an injection molding machine for the manufacture of bottle preforms.

Each of these process embodiments, along with a description of the polyester polymers, is now explained in further detail.

The polyester polymer may be PET, PEN, or copolymers or mixtures, thereof. A preferred polyester polymer is polyethylene terephthalate. As used herein, a polyalkylene terephthalate polymer or polyalkylene naphthalate polymer means a polymer having polyalkylene terephthalate units or polyalkylene naphthalate units in an amount of at least 60 mole% based on the total moles of units in the polymer, respectively. Thus, the polymer may contain ethylene terephthalate or naphthalate units in an amount of at least 85 mole%, or at least 90 mole%, or at least 92 mole%, or at least 96 mole%, as measured by the mole% of ingredients added to the reaction mixture. Thus, a polyethylene terephthalate polymer may comprise a copolyester of ethylene terephthalate units and other units derived from an alkylene glycol or aryl glycol with an aliphatic or aryl dicarboxylic acid.

While reference is made in certain instances to polyethylene terephthalate, it is to be understood that the polymer may also be a polyalkylene naphthalate polymer.

Polyethylene terephthalate can be manufactured by reacting a diacid or diester component comprising at least 60 mole % terephthalic acid or $C_1$ - $C_4$ dialkylterephthalate, or at least 70 mole %, or at least 85 mole %, or at least 90 mole %, and for many applications at least 95 mole%, and a diol component comprising at least 60 mole % ethylene glycol, or at least 70 mole %, or at least 85 mole %, or at least 90 mole %, and for many applications, at least 95 mole %. It is preferable that the diacid component is terephthalic acid and the diol component is ethylene glycol. The mole percentage for all the diacid component(s) totals 100 mole %, and the mole percentage for all the diol component(s) totals 100 mole %.

The polyester pellet compositions may include admixtures of polyalkylene terephthalates, PEN, or mixtures thereof, along with other thermoplastic polymers, such as polycarbonates and polyamides. It is preferred in many instances that the polyester composition comprise a majority of a polyalkylene terephthalate polymers or PEN polymers, or in an amount of at least 80 wt.%, or at least 95 wt.%, based on the weight of polymers (excluding fillers, compounds, inorganic compounds or particles, fibers, impact modifiers, or other polymers which may form a discontinuous phase). In addition to units derived from terephthalic acid, the acid component of the present polyester may be modified with, or replaced by, units derived from one or more other dicarboxylic acids, such as aromatic dicarboxylic acids preferably having from 8 to 14 carbon atoms, aliphatic dicarboxylic acids preferably having 4 to 12 carbon atoms, or cycloaliphatic dicarboxylic acids preferably having 8 to 12 carbon atoms.

Examples of dicarboxylic acid units useful for the acid component are units from phthalic acid, isophthalic acid, naphthalene-2,6-dicarboxylic acid, cyclohexanedicarboxylic acid, cyclohexanediacetic acid, diphenyl-4,4'-dicarboxylic acid, succinic acid, glutaric acid, adipic acid, azelaic acid, sebacic acid, and the like, with isophthalic acid, naphthalene-2,6-dicarboxylic acid, and cyclohexanedicarboxylic acid being preferable.

It should be understood that use of the corresponding acid anhydrides, esters, and acid chlorides of these acids is included in the term "dicarboxylic acid".

In addition to units derived from ethylene glycol, the diol component of the present polyester may be modified with, or replaced by, units from additional diols including cycloaliphatic diols preferably having 6 to 20 carbon atoms and aliphatic diols preferably having 2 to 20 carbon atoms. Examples of such diols include diethylene glycol (DEG); triethylene glycol; 1,4-cyclohexanedimethanol; propane-1,3-diol; butane-1,4-diol; pentane-1,5-diol; hexane-1,6-diol; 3-methylpentanediol- (2,4); 2-methylpentanediol-(1,4); 2,2,4-trimethylpentane-diol-(1,3); 2,5- ethylhexanediol-(1,3); 2,2-diethyl propane-diol-(1, 3); hexanediol-(1,3); 1,4-di-(hydroxyethoxy)-benzene; 2,2-bis-(4-hydroxycyclohexyl)-propane; 2,4- dihydroxy-1,1,3,3-tetramethyl-cyclobutane; 2,2-bis-(3-hydroxyethoxyphenyl)-propane; and 2,2-bis-(4-hydroxypropoxyphenyl)-propane.

The polyester compositions of the invention may be prepared by conventional polymerization procedures well-known in the art sufficient to effect esterification and polycondensation. Polyester melt phase manufacturing processes include direct condensation of a dicarboxylic acid with a diol optionally in the presence of esterification catalysts in the esterification zone, followed by polycondensation in the prepolymer and finishing zones in the presence of a polycondensation catalyst; or else ester interchange usually in the presence of a transesterification catalyst in the esterification zone, followed by prepolymerization and finishing in the presence of a polycondensation catalyst, and each may optionally be subsequently solid-stated according to known methods. After melt phase and/or solid-state polycondensation the polyester polymer compositions typically have an intrinsic viscosity (It.V.) ranging from 0.55 dL/g to 0.70 dUg as precursor pellets, and an It.V. ranging from 0.70 dUg to 1.1 dL/g for solid stated pellets.

To further illustrate, a mixture of one or more dicarboxylic acids, preferably aromatic dicarboxylic acids, or ester forming derivatives thereof, and one or more diols, are continuously fed to an esterification reactor operated at a temperature of between 200°C and 300°C, typically between 240°C and 290°C, and at a pressure of 69 kPa (1 psig) up to 482 kPa (70 psig). The residence time of the reactants typically ranges from between about one and five hours. Normally, the dicarboxylic acid is directly esterified with diol(s) at elevated pressure and at a temperature of 240°C to 270°C. The esterification reaction is continued until a degree of esterification of at least 60% is achieved, but more typically until a degree of esterification of at least 85% is achieved to make the desired monomer. The esterification monomer reaction is typically uncatalyzed in the direct esterification process and catalyzed in transesterification processes. Polycondensation catalysts may optionally be added in the esterification zone along with esterification/transesterification catalysts.

Typical esterification/transesterification catalysts which may be used include titanium alkoxides, dibutyl tin dilaurate, used separately or in combination, optionally with zinc, manganese, or magnesium acetates or benzoates and/or other such catalyst materials as are well known to those skilled in the art. Phosphorus-containing compounds and cobalt compounds may also be present in the esterification zone. The resulting products formed in the esterification zone include bis(2-hydroxyethyl) terephthalate (BHET) monomer, low molecular weight oligomers, DEG, and water as the condensation by-product, along with other trace impurities formed by the reaction of the catalyst and other compounds such as colorants or the phosphorus-containing compounds. The relative amounts of BHET and oligomeric species will vary depending on whether the process is a direct esterification process, in which case the amount of oligomeric species are significant and even present as the major species, or a transesterification process, in which case the relative quantity of BHET predominates over the oligomeric species. The water is removed as the esterification reaction proceeds and excess ethylene glycol is removed to provide favorable equilibrium conditions. The esterification zone typically produces the monomer and oligomer mixture, if any, continuously in a series of one or more reactors. Alternatively, the monomer and oligomer mixture could be produced in one or more batch reactors.

It is understood, however, that in a process for making PEN, the reaction mixture will contain monomeric species such as bis(2-hydroxyethyl) naphthalate and its corresponding oligomers. Once the ester monomer is made to the desired degree of esterification, it is transported from the esterification reactors in the esterification zone to the polycondensation zone comprised of a prepolymer zone and a finishing zone.

Polycondensation reactions are initiated and continued in the melt phase in a prepolymerization zone and finished in the melt phase in a finishing zone, after which the melt may be solidified into precursor solids in the form of chips, pellets, or any other shape. For convenience, solids are referred to as pellets, but it is understood that a pellet can have any shape, structure, or consistency. If desired, the polycondensation reaction may be continued by solid-stating the precursor pellets in a solid-stating zone.

Although reference is made to a prepolymer zone and a finishing zone, it is to be understood that each zone may comprise a series of one or more distinct reaction vessels operating at different conditions, or the zones may be combined into one reaction vessel using one or more sub-stages operating at different conditions in a single reactor. That is, the prepolymer stage can involve the use of one or more reactors operated continuously, one or more batch reactors or even one or more reaction steps or sub-stages performed in a single reactor vessel. In some reactor designs, the prepolymerization zone represents the first half of polycondensation in terms of reaction time, while the finishing zone represents the second half of polycondensation. While other reactor designs may adjust the residence time between the prepolymerization zone to the finishing zone at about a 2:1 ratio, a common distinction in all designs between the prepolymerization zone and the finishing zone is that the latter zone operates at a higher temperature, lower pressure, and a higher surface renewal rate than the operating conditions in the prepolymerization zone. Generally, each of the prepolymerization and the finishing zones comprise one or a series of more than one reaction vessel, and the prepolymerization and finishing reactors are sequenced in a series as part of a continuous process for the manufacture of the polyester polymer.

In the prepolymerization zone, also known in the industry as the low polymerizer, the low molecular weight monomers and minor amounts of oligomers are polymerized via polycondensation to form polyethylene terephthalate polyester (or PEN polyester) in the presence of a catalyst. If the catalyst was not added in the monomer esterification stage, the catalyst is added at this stage to catalyze the reaction between the monomers and low molecular weight oligomers to form prepolymer and split off the diol as a by-product. If a polycondensation catalyst was added to the esterification zone, it is typically blended with the diol and fed into the esterification reactor as the diol feed. Other compounds such as phosphorus-containing compounds, cobalt compounds, and colorants can also be added in the prepolymerization zone. These compounds may, however, be added in the finishing zone instead of or in addition to the prepolymerization zone.

In a typical DMT-based process, those skilled in the art recognize that other catalyst material and points of adding the catalyst material and other ingredients vary from a typical direct esterification process.

Typical polycondensation catalysts include the compounds of antimony, titanium, germanium, zinc and tin in an amount ranging from 0.1 ppm to 1,000 ppm based on the weight of resulting polyester polymer. A common polymerization catalyst added to the prepolymerization zone is an antimony-based polymerization catalyst. Suitable antimony-based catalysts include antimony (III) and antimony (V) compounds recognized in the art, and in particular, diol-soluble antimony (III) and antimony (V) compounds with antimony (III) being most commonly used. Other suitable compounds include those antimony compounds that react with, but are not necessarily soluble in, the diols, with examples of such compounds including antimony (III) oxide. Specific examples of suitable antimony catalysts include antimony (III) oxide and antimony (III) acetate, antimony (III) glycolates, antimony (III) ethyleneglycoxide and mixtures thereof, with antimony (III) oxide being preferred. The preferred amount of antimony catalyst added is that effective to provide a level of between 75 ppm and 400 ppm of antimony by weight of the resulting polyester.

This prepolymer polycondensation stage generally employs a series of two or more vessels and is operated at a temperature of between 250°C and 305° C for between one and four hours. During this stage, the It.V. of the monomers and oligomers is typically increased up to no more than 0.35 dUg. The diol byproduct is removed from the prepolymer melt using an applied vacuum ranging from 2 kPa (15 torr) to 9.3 kPa (70 torr) to drive the reaction to completion. In this regard, the polymer melt is typically agitated to promote the escape of the diol from the polymer melt and to assist the highly viscous polymer melt in moving through the polymerization vessels. As the polymer melt is fed into successive vessels, the molecular weight and thus the intrinsic viscosity of the polymer melt increases. The temperature of each vessel is generally increased and the pressure decreased to allow for a greater degree of polymerization in each successive vessel. However, to facilitate removal of glycols, water, alcohols, aldehydes, and other reaction products, the reactors are typically run under a vacuum or purged with an inert gas. Inert gas is any gas which does not cause unwanted reaction or product characteristics at reaction conditions. Suitable gases include, but are not limited to, carbon dioxide, argon, helium, and nitrogen.

Once an It.V. of typically no greater than 0.35 dUg is obtained, the prepolymer is fed from the prepolymer zone to a finishing zone where the second half of polycondensation is continued in one or more finishing vessels ramped up to higher temperatures than present in the prepolymerization zone, to a value within a range of from 280°C to 305°C until the It.V. of the melt is increased from the It.V of the melt in the prepolymerization zone (typically 0.30 dUg but usually not more than 0.35 dL/g) to an It.V in the range of from 0.50 dL/g to 0.70 dL/g. The final vessel, generally known in the industry as the "high polymerizer," "finisher," or "polycondenser," is operated at a pressure lower than used in the prepolymerization zone, typically within a range of between 0.8 torr and 4.0 torr. Although the finishing zone typically involves the same basic chemistry as the prepolymer zone, the fact that the size of the molecules, and thus the viscosity, differs, means that the reaction conditions also differ. However, like the prepolymer reactor, each of the finishing vessel(s) is connected to a flash vessel and each is typically agitated to facilitate the removal of ethylene glycol.

The residence time in the polycondensation vessels and the feed rate of the ethylene glycol and terephthalic acid into the esterification zone in a continuous process is determined in part based on the target molecular weight of the polyethylene terephthalate polyester. Because the molecular weight can be readily determined based on the intrinsic viscosity of the polymer melt, the intrinsic viscosity of the polymer melt is generally used to determine polymerization conditions, such as temperature, pressure, the feed rate of the reactants, and the residence time within the polycondensation vessels.

Once the desired It.V. is obtained in the finisher, the melt is fed to a pelletization zone where it is filtered and extruded into the desired form. The polyester polymers of the present invention are filtered to remove particulates over a designated size, followed by extrusion in the melt phase to form polymer sheets, filaments, or pellets. Although this zone is termed a "pelletization zone," it is understood that this zone is not limited to solidifying the melt into the shape of pellets, but includes solidification into any desired shape. Preferably, the polymer melt is extruded immediately after polycondensation. After extrusion, the polymers are quenched, preferably by spraying with water or immersing in a water trough, to promote solidification. The solidified condensation polymers are cut into any desired shape, including pellets.

As known to those of ordinary skill in the art, the pellets formed from the condensation polymers, in some circumstances, may be subjected to a solid-stating zone wherein the solids are first crystallized followed by solid-state polymerization (SSP) to further increase the It.V. of the polyester composition solids from the It.V exiting the melt phase to the desired It.V. useful for the intended end use. Typically, the It.V. of solid stated polyester solids ranges from 0.70 dL/g to 1.15 dUg. In a typical SSP process, the crystallized pellets are subjected to a countercurrent flow of nitrogen gas heated to 180°C to 220°C, over a period of time as needed to increase the It.V. to the desired target.

Thereafter, polyester polymer solids, whether solid stated or not, are remelted and re-extruded to form items such as containers (e.g., beverage bottles), filaments, films, or other applications. At this stage, the pellets are typically fed into an injection molding machine suitable for making preforms which are stretch blow molded into bottles.

As noted, titanium carbide particles may be added at any point in the melt phase or thereafter, such as to the esterification zone, to the prepolymerization zone, to the finishing zone, or to the pelletizing zone, or at any point between each of these zones, such as to metering devices, pipes, and mixers. The titanium carbide particles can also be added to the pellets in a solid stating zone within the solid stating zone or as the pellets exit the solid-stating reactor. Furthermore, the titanium carbide particles may be added to the pellets in combination with other feeds to the injection molding machine or fed separately to the injection molding machine.

If the titanium carbide particles are added to the melt phase, it is desirable to use particles having a small enough $d_{50}$ particle size to pass through the filters in the melt phase, and in particular the pelletization zone. In this way, the particles will not clog up the filters as seen by an increase in gear pump pressure needed to drive the melt through the filters. However, if desired, the titanium carbide particles can be added after the pelletization zone filter and before or to the extruder.

In addition to adding titanium carbide particles to virgin polymer, whether to make a concentrate or added neat to the melt phase after the prepolymerization reactors or to an injection molding zone, titanium carbide particles may also be added to post-consumer recycle (PCR) polymer. PCR containing titanium carbide particles is added to virgin bulk polymers by solid/solid blending or by feeding both solids to an extruder. Alternatively, PCR polymers containing titanium carbide particles are advantageously added to the melt phase for making virgin polymer between the prepolymerization zone and the finishing zone. The It.V. of the virgin melt phase after the prepolymerization zone is sufficiently high at that point to enable the PCR to be melt blended with the virgin melt. Alternatively, PCR may be added to the finisher. In either case, the PCR added to the virgin melt phase may contain the titanium carbide particles. The titanium carbide particles may be combined with PCR by any of the methods noted above, or separately fed to and melt blended in a heated vessel, followed by addition of the PCR melt containing the titanium carbide particles to the virgin melt phase at these addition points.

Other components can be added to the compositions of the present invention to enhance the performance properties of the polyester polymers. For example, crystallization aids, impact modifiers, surface lubricants, denesting agents, compounds, antioxidants, ultraviolet light absorbing agents, catalyst deactivators, colorants, nucleating agents, acetaldehyde reducing compounds, other reheat rate enhancing aids, sticky bottle additives such as talc, and fillers and the like can be included. The polymer may also contain small amounts of branching agents such as trifunctional or tetrafunctional comonomers such as trimellitic anhydride, trimethylol propane, pyromellitic dianhydride, pentaerythritol, and other polyester forming polyacids or diols generally known in the art. All of these additives and many others and their use are well known in the art and do not require extensive discussion. Any of these compounds can be used in the present composition. It is preferable that the present composition be essentially comprised of a blend of thermoplastic polymer and titanium carbide particles, with only a modifying amount of other ingredients being present.

Examples of other reheat rate enhancing additives that may be used in combination with titanium carbide particles include carbon black, antimony, tin, copper, silver, gold, palladium, platinum, black iron oxide, and the like, as well as near infrared absorbing dyes, including, but not limited to, those disclosed in U.S. Pat. No. 6,197,851.

The compositions of the present invention optionally may additionally contain one or more UV absorbing compounds. One example includes UV-absorbing compounds which are covalently bound to the polyester molecule as either a comonomer, a side group, or an end group. Suitable UV-absorbing compounds are thermally stable at polyester processing temperatures, absorb in the range of from 320 nm to 380 nm, and are nonextractable from the polymer. The UV-absorbing compounds preferably provide less than 20%, more preferably less than 10%, transmittance of UV light having a wavelength of 370 nm through a bottle wall 305 μm thick. Suitable chemically reactive UV absorbing compounds may include, for example, substituted methine compounds.

Suitable compounds, their methods of manufacture and incorporation into polyesters are further disclosed in U.S. Pat. No. 4,617,374. The UV-absorbing compound(s) may be present in amounts between 1 ppm to 5,000 ppm by weight, preferably from 2 ppm to 1,500 ppm, and more preferably between 10 ppm and 500 ppm by weight. Dimers of the UV absorbing compounds may also be used. Mixtures of two or more UV absorbing compounds may be used. Moreover, because the UV absorbing compounds are reacted with or copolymerized into the backbone of the polymer, the resulting polymers display improved processability including reduced loss of the UV absorbing compound due to plateout and/or volatilization and the like.

The polyester compositions of the present invention are suitable for forming a variety of shaped articles, including films, sheets, tubes, preforms, molded articles, containers and the like. Suitable processes for forming the articles are known and include extrusion, extrusion blow molding, melt casting, injection molding, stretch blow molding, thermoforming, and the like.

The polyesters of this invention may also, optionally, contain color stabilizers, such as certain cobalt compounds. These cobalt compounds can be added as cobalt acetates or cobalt alcoholates (cobalt salts or higher alcohols). They can be added as solutions in ethylene glycol. Polyester resins containing high amounts of the cobalt additives can be prepared as a masterbatch for extruder addition. The addition of the cobalt additives as color toners is a process used to minimize or eliminate the yellow color, b*, of the resin. Other cobalt compounds such as cobalt aluminate, cobalt benzoate, cobalt chloride and the like may also be used as color stabilizers. It is also possible to add certain diethylene glycol (DEG) inhibitors to reduce or prevent the formation of DEG in the final resin product. Preferably, a specific type of DEG inhibitor would comprise a sodium acetate-containing composition to reduce formation of DEG during the esterification and polycondensation of the applicable diol with the dicarboxylic acid or hydroxyalkyl, or hydroxyalkoxy substituted carboxylic acid. It is also possible to add stress crack inhibitors to improve stress crack resistance of bottles, or sheeting, produced from this resin.

With regard to the type of polyester which can be utilized, any high clarity, neutral hue polyester, copolyester, etc., in the form of a resin, powder, sheet, etc., can be utilized to which it is desired to improve the reheat time or the heat-up time of the resin. Thus, polyesters made from either the dimethyl terephthalate or the terephthalic acid route or various homologues thereof as well known to those skilled in the art along with conventional catalysts in conventional amounts and utilizing conventional processes can be utilized according to the present invention. Moreover, the type of polyester can be made according to melt polymerization, solid state polymerization, and the like. Moreover, the present invention can be utilized for making high clarity, low haze powdered coatings. An example of a preferred type of high clarity polyester resin is set forth herein below wherein the polyester resin is produced utilizing specific amounts of antimony catalysts, low amounts of phosphorus and a bluing agent which can be a cobalt compound.

As noted above, the polyester is produced in a conventional manner as from the reaction of a dicarboxylic acid having from 2 to 40 carbon atoms with polyhydric alcohols such as glycols or diols containing from 2 to 20 carbon atoms. The dicarboxylic acids can be an alkyl having from 2 to 20 carbon atoms, or an aryl, or alkyl substituted aryl containing from 8 to 16 carbon atoms. An alkyl diester having from 4 to 20 carbon atoms or an alkyl substituted aryl diester having from 10 to 20 carbon atoms can also be utilized. Desirably, the diols can contain from 2 to 8 carbon atoms and preferably is ethylene glycol. Moreover, glycol ethers having from 4 to 12 carbon atoms may also be used. Generally, most of the commonly produced polyesters are made from either dimethyl terephthalate or terephthalic acid with ethylene glycol. When powdered resin coatings are made, neopentyl glycol is often used in substantial amounts.

Specific areas of use of the polyester include situations wherein preforms exist which then are heated to form a final product, for example, as in the use of preforms which are blow-molded to form a bottle, for example, a beverage bottle, and the like. Another use is in preformed trays, preformed cups, and the like, which are heated and drawn to form the final product. Yet another use relates to polyester yarn which is forced through a plurality of spinnerets having an infrared quench collar thereabout. Additionally, the present invention is applicable to highly transparent, clear and yet low haze powdered coatings wherein a desired transparent film or the like is desired.

EXAMPLES

The titanium carbide (TiC) particles used in the examples were purchased from Nanostructured & Amorphous Materials, Inc. The sample had a $d_{50}$ of 65 nm and a specific surface area of 15-25 $m^2$/g. The particles had a morphology of spherical & polyhedral. The particles had a stated bulk density of 0.54 g/cm$^3$ and a true density of 4.93 g/cm$^3$.

The polymer used in the examples was commercial grade PET Voridian™ CM01 Polymer, which is a PET copolymer containing no reheat additive. The titanium carbide reheat particles were added into CM01 during melt compounding. First, a concentrate containing 500 ppm titanium carbide reheat particles was made using a one-inch single screw extruder with saxton and pineapple mixing head. The extruder was also equipped with pelletization capability. The concentrate was then crystallized using a tumbling crystallizer at 170°C for 1 hour. The crystallized concentrate was then let down into CM01 virgin polymer with the final concentration of the titanium carbide in CM01 ranging from 3 ppm to 16 ppm. During the compounding process, CM01 virgin polymer was used to purge the extruder barrel several times to ensure no cross contamination occurred between different batches. Finally, the CM01 polymer with different levels of titanium carbide reheat particles was injection molded into twenty-ounce bottle preforms using a BOY (22D) injection molding machine operated under standard molding conditions.

In the examples, the reheat of a given polyester composition was measured by twenty-ounce bottle preform Reheat Improvement Temperature (RIT). In order to determine the RIT of each composition, all preforms were run through the oven bank of a Sidel SBO2/3 blow molding unit in a consistent manner. The lamp settings for the Sidel blow molding machine are shown in Table 1. The reheat time was 38 seconds, and the power output to the quartz infrared heaters was set at 64%. A series of five preforms was passed in front of the quartz infrared heaters and the preform surface temperature was measured. As mentioned earlier, in the examples, the reheat rate of a given composition was measured by preform reheat improvement temperature (RIT). The preform reheat improvement temperature was calculated by comparing the difference in preform surface temperature of the target samples with that of the virgin CM01. The higher the RIT value, the higher the reheat rate of the composition.

The concentration of titanium carbide in CM01 was determined by Inductively Coupled Plasma-Optical Emission Spectroscopy (ICP-OES) using a Perkin-Elmer Optima 2000 instrument. Color measurements were performed using a HunterLab UltraScan XE (Hunter Associates Laboratory, Inc., Reston VA), which employs diffuse/8° (illumination/view angle) sphere optical geometry. The color scale employed was the CIE LAB scale with D65 illuminant and 10° observer specified. Preforms with a mean outer diameter of 0.846 inches and a wall thickness of 0.154 inches were measured in regular transmission mode using ASTM D1746, "Standard Test Method for Transparency of Plastic Sheeting." Preforms were held in place in the instrument using a preform holder, available from HunterLab, and triplicate measurements were averaged, whereby the sample was rotated 90° about its center axis between each measurement.

Color in transmission at any thickness can be recalculated according to the following:

$$T_h = T_o \, 10^{-\beta h}$$

$$\beta = \frac{\log_{10}\left(T_o/T_d\right)}{d}$$

where

$T_h$ = transmittance at target thickness
$T_o$ = transmittance without absorption
$\beta$ = Absorption coefficient
$T_d$ = transmittance measured for sample
h = target thickness
d = thickness of sample

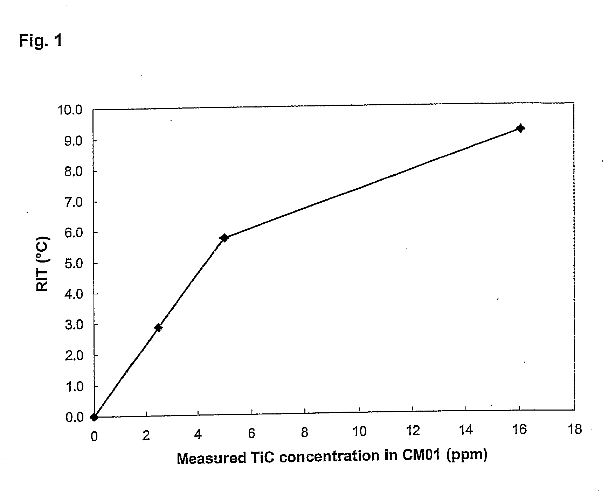

Figure 1 and Table 2 show the correlation between the concentration of titanium carbide (TiC) particles and the reheat improvement temperature (RIT), from which one can see that an RIT of 9.2°C was achieved using 16ppm titanium carbide.

**Fig. 1** depicts the correlation between titanium carbide particle concentration and twenty-ounce bottle preform reheat improvement temperature (RIT).

**TABLE 2.** Impact of titanium carbide on twenty-ounce bottle preform reheat improvement temperature (RIT) and color.

| Sample No. | System | TiC $d_{50}$ (um) | Measured TiC concentration (ppm) | Preform RIT (°C) | L* | a* | b* |
|---|---|---|---|---|---|---|---|
| 1 | CM01 | NA | 0 | 0.0 | 83.3 | -0.5 | 2.5 |
| 2 | CM01+TiC | 0.065 | 3 | 2.9 | 79.5 | -0.4 | 2.4 |
| 3 | CM01+TiC | 0.065 | 5 | 5.7 | 76.2 | -0.3 | 2.5 |
| 4 | CM01+TiC | 0.065 | 16 | 9.2 | 72.2 | -0.2 | 2.5 |

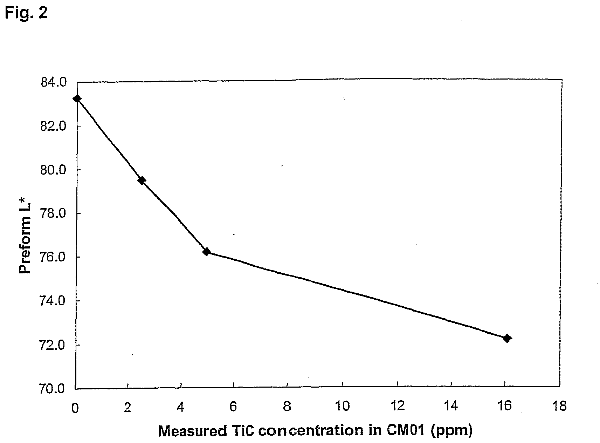

Figures 2-4 show that the use of titanium carbide particles led to satisfactory preform L*, a*, and b* values.

**Fig. 2** depicts the correlation between titanium carbide particle concentration and twenty-ounce bottle preform L* value.

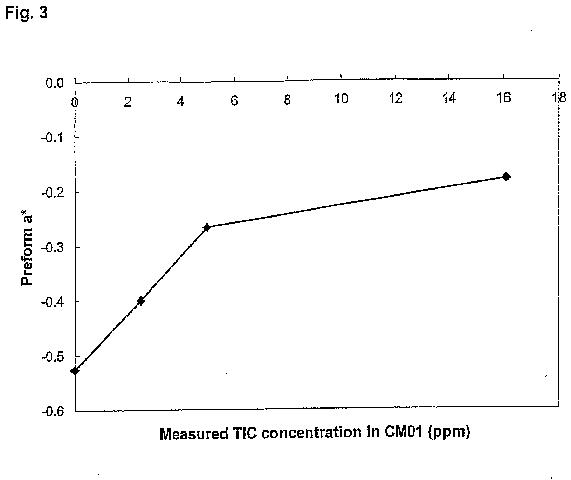

**Fig. 3** depicts the correlation between titanium carbide particle concentration and twenty-ounce bottle preform a* value.

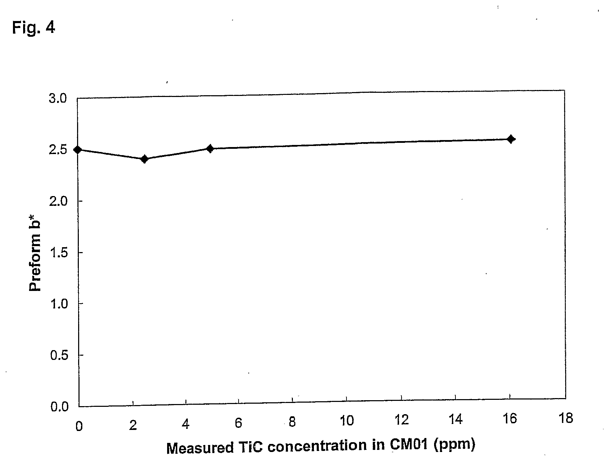

**Fig. 4** depicts the correlation between titanium carbide particle concentration and twenty-ounce bottle preform b* value.

The impact of titanium carbide on preform ItV is shown in Table 3, from which one can see that no significant preform ItV change resulted from the addition of titanium carbide.

**TABLE 3.** Impact of titanium carbide particles on twenty-ounce bottle preform ItV.

| Sample No. | System | Measured TiC concentration (ppm) | Preform ItV |
|---|---|---|---|
| 5 | CM01 | 0 | 0.78 |
| 6 | TiC (50-80nm) | 3 | 0.77 |
| 7 | TiC (50-80nm) | 5 | 0.77 |
| 8 | TiC (50-80nm) | 16 | 0.75 |

**Claims**

1. A polyester composition having improved reheat, comprising:

   a polyester polymer; and
   titanium carbide particles, having a median particle size from 0.005 $\mu$m to 100 $\mu$m, dispersed in the polyester polymer in an amount from 0.5 ppm to 1000 ppm, with respect to the total weight of the polyester composition.

2. The polyester composition of claim 1, wherein the titanium carbide particles have a median particle size from 0.01 $\mu$m to 10 $\mu$m.

3. The polyester composition of claim 1, wherein the titanium carbide particles have a median particle size from 0.01 $\mu$m to 5 $\mu$m.

4. The polyester composition of claim 1, wherein the titanium carbide particles are present in an amount from 1 ppm to 500 ppm, with respect to the total weight of the polyester composition.

5. The polyester composition of claim 1 , wherein the titanium carbide particles are present in an amount from 5 ppm to 50 ppm, with respect to the total weight of the polyester composition.

6. The polyester composition of claim 1, wherein the polyester polymer comprises polyethylene terephthalate.

7. The polyester composition of claim 1 , wherein the polyester composition is in the form of a beverage bottle preform.

8. The polyester composition of claim 1, wherein the polyester composition is in the form of a beverage bottle.

9. The polyester composition of claim 1, wherein the polyester composition is in the form of a molded article.

10. The polyester composition of claim 1 , wherein the polyester polymer comprises a continuous phase, and wherein the titanium carbide particles are dispersed within the continuous phase.

11. The polyester composition of claim 1, wherein the titanium carbide particles have a median particle size from 0.01 $\mu$m to 10 $\mu$m, and provide the polyester composition with a reheat improvement temperature (RIT) of at least 5 °C while maintaining a preform L* value of 70 or more.

12. The polyester composition of claim 1, wherein the titanium carbide particles comprise particles coated with titanium carbide.

13. The polyester composition of claim 1, wherein the titanium carbide particles comprise hollow spheres comprised of titanium carbide.

14. The polyester composition of claim 1, wherein the titanium carbide particles comprise a titanium carbide having a chemical formula from $TiC_{0.47}$ to $TiC_{1.0}$.

15. The polyester composition of claim 1, wherein the titanium carbide particles comprise titanium carbide in an amount of at least 90 wt.%, with respect to the total weight of the titanium carbide particles.

16. The polyester composition of claim 15, wherein the titanium carbide particles further comprise titanium nitride.

17. The polyester composition of claim 15, wherein the titanium carbide particles further comprise elemental titanium.

18. The polyester composition of claim 1, wherein the titanium carbide particles have a particle size distribution in which the span (S) is from 0 to 10.

19. The polyester composition of claim 1, wherein the titanium carbide particles have a particle size distribution in which the span (S) is from 0.01 to 2.

20. The polyester composition of claim 1, comprising:

a polyester polymer in which poly(ethylene terephthalate) residues comprise at least 90 wt.% of the polyester polymer; and
titanium carbide particles, having a median particle size from 0.01 $\mu$m to 10 $\mu$m, randomly dispersed in the polyester polymer in an amount from 1 to 50 ppm, wherein the polyester composition has a reheat improvement temperature of 5 °C or more and a preform L* value of 70 or more.

21. A process for producing a polyester composition according to claim 1, said process comprising:

an esterification step comprising transesterifying a dicarboxylic acid diester with a diol, or directly esterifying a dicarboxyiic acid with a diol, to obtain one or more of a polyester monomer or a polyester oligomer;
a polycondensation step comprising reacting the one or more of a polyester monomer or a polyester oligomer in a polycondensation reaction in the presence of a polycondensation catalyst to produce a polyester polymer having an It.V. from 0.50 dL/g to 1.1 dL/g;
a pandiculation step in which the molten polyester polymer is solidified into particles;
an optional solid-stating step in which the solid polymer is polymerized to an It.V. from 0.70 dL/g to 1.2 dL/g; and
a particle addition step comprising adding and dispersing titanium carbide particles to provide an amount from 1 ppm to 500 ppm by weight of the polymer, wherein the particle addition step occurs before, during, or after any of the preceding steps.

22. The process according to claim 21, wherein the process further comprises a forming step, following the solid-stating step, the forming step comprising melting and extruding the resulting solid polymer to obtain a formed item having the titanium carbide particles dispersed therein.

23. The process according to claim 22, wherein the particle addition step occurs during or after the solid-stating step and prior to the forming step.

24. The process according to claim 21, wherein the particle addition step comprises adding the titanium carbide particles as a thermoplastic concentrate prior to or during the forming step, the thermoplastic concentrate comprising the titanium carbide particles in an amount from 100 ppm to 5,000 ppm, with respect to the weight of the thermoplastic concentrate.

25. The process according to claim 21, wherein the titanium carbide particles have a median particle size from 0.005 $\mu$m to 100 $\mu$m.

26. The process according to claim 21, wherein the particle addition step is carried out prior to or during the polycondensation step.

27. The process according to claim 21, wherein the particle addition step is carried out prior to or during the particulation step.

28. The process according to claim 21, wherein the particle addition step is carried out prior to or during the solid-stating step.

29. The process according to claim 22, wherein the particle addition step is carried out prior to or during the forming step.

30. The process according to claim 21, wherein the dicarboxylic acid comprises terephthalic acid.

31. The process according to claim 21, wherein the dicarboxylic acid diester comprises dimethyl terephthalate.

32. The process according to claim 21, wherein the diol comprises ethylene glycol.

33. The process according to claim 21, wherein the dicarboxylic acid comprises naphthalene dicarboxylic acid.

34. The process according to claim 21, wherein the dicarboxyiic acid comprises an aromatic dicarboxyiic acid.

35. The process according to claim 24, wherein the thermoplastic concentrate comprises:

   titanium carbide particles, in an amount ranging from 0.15 wt.% up to 35 wt.% based on the weight of the thermoplastic concentrate; and
   a thermoplastic polymer, in an amount of at least 65 wt.%, based on the weight of the thermoplastic concentrate.

36. The process according to claim 35, wherein the thermoplastic polymer comprises one or more of: a polyester, a polyolefin, or a polycarbonate.

**Patentansprüche**

1. Polyesterzusammensetzung mit verbesserter Wiedererwärmung, umfassend:

   ein Polyesterpolymer; und
   Titancarbidteilchen mit einer mittleren Teilchengröße von 0,005 µm bis 100 µm, die in dem Polyesterpolymer in einer Menge im Bereich von 0,5 ppm bis 1000 ppm dispergiert sind, bezogen auf das Gesamtgewicht der Polyesterzusammensetzung.

2. Polyesterzusammensetzung nach Anspruch 1, wobei die Titancarbidteilchen eine mittlere Teilchengröße von 0,01 µm bis 10 µm aufweisen.

3. Polyesterzusammensetzung nach Anspruch 1, wobei die Titancarbidteilchen eine mittlere Teilchengröße von 0,01 µm bis 5 µm aufweisen.

4. Polyesterzusammensetzung nach Anspruch 1, wobei die Titancarbidteilchen in einer Menge von 0,5 ppm bis 500 ppm vorliegen, bezogen auf das Gesamtgewicht der Polyesterzusammensetzung.

5. Polyesterzusammensetzung nach Anspruch 1, wobei die Titancarbidteilchen in einer Menge von 5 ppm bis 50 ppm vorliegen, bezogen auf das Gesamtgewicht der Polyesterzusammensetzung.

6. Polyesterzusammensetzung nach Anspruch 1, wobei das Polyesterpolymer Polyethylenterephthalat umfasst.

7. Polyesterzusammensetzung nach Anspruch 1, wobei die Polyesterzusammensetzung in Form einer Getränkeflaschenvorform vorliegt.

8. Polyesterzusammensetzung nach Anspruch 1, wobei die Polyesterzusammensetzung in Form einer Getränkeflasche vorliegt.

9. Polyesterzusammensetzung nach Anspruch 1, wobei die Polyesterzusammensetzung in Form eines Formkörpers vorliegt.

10. Polyesterzusammensetzung nach Anspruch 1, wobei das Polyesterpolymer eine kontinuierliche Phase umfasst, und wobei die Titancarbidteilchen in der kontinuierlichen Phase dispergiert sind.

11. Polyesterzusammensetzung nach Anspruch 1, wobei die Titancarbidteilchen eine mittlere Teilchengröße von 0,01 $\mu$m bis 10 $\mu$m aufweisen und die Polyesterzusammensetzung mit einer Wiedererwärmungsverbesserungstemperatur (RIT) von mindestens 5 °C versehen sind, wobei ein L* -Wert der Vorform von 70 oder mehr beibehalten wird.

12. Polyesterzusammensetzung nach Anspruch 1, wobei die Titancarbidteilchen mit Titancarbid beschichtete Teilchen umfassen.

13. Polyesterzusammensetzung nach Anspruch 1, wobei die Titancarbidteilchen hohle Kugeln umfassen, die Titancarbid umfassen.

14. Polyesterzusammensetzung nach Anspruch 1, wobei die Titancarbidteilchen ein Titancarbid mit einer chemischen Formel von $TiC_{0,47}$ bis $TiC_{1,0}$ umfassen.

15. Polyesterzusammensetzung nach Anspruch 1, wobei die Titancarbidteilchen Titancarbid in einer Menge von mindestens 90 Gew.-% umfassen, bezogen auf das Gesamtgewicht der Titancarbidteilchen.

16. Polyesterzusammensetzung nach Anspruch 15, wobei die Titancarbidteilchen weiter Titannitrid umfassen.

17. Polyesterzusammensetzung nach Anspruch 15, wobei die Titancarbidteilchen ferner elementares Titan umfassen.

18. Polyesterzusammensetzung nach Anspruch 1, wobei die Titancarbidteilchen eine Teilchengrößenverteilung aufweisen, bei der die Spanne (S) 0 bis 10 beträgt.

19. Polyesterzusammensetzung nach Anspruch 1, wobei die Titancarbidteilchen eine Teilchengrößenverteilung aufweisen, bei der die Spanne (S) 0,01 bis 2 beträgt.

20. Polyesterzusammensetzung nach Anspruch 1, umfassend:

ein Polyesterpolymer, in dem Polyethylenterephthalat-Reste mindestens 90 Gew.-% des Polyesterpolymers ausmachen; und

Titancarbidteilchen mit einer mittleren Teilchengröße von 0,01 $\mu$m bis 10 $\mu$m, die regellos in dem Polyesterpolymer in einer Menge von 1 bis 50 ppm dispergiert sind, wobei die Polyesterzusammensetzung eine Wiedererwärmungsverbesserungstemperatur von 5 °C oder mehr und einen L*-Wert der Vorform von 70 oder mehr aufweist.

21. Verfahren zur Herstellung einer Polyesterzusammensetzung gemäß Anspruch 1, umfassend:

einen Veresterungsschritt, umfassend das Umestern eines Dicarbonsäurediesters mit einem Diol oder direktes Verestern einer Dicarbonsäure mit einem Diol, um ein oder mehrere Polyestermonomere oder Polyesteroligomere zu erhalten;

einen Polykondensationsschritt, umfassend das Umsetzen eines oder mehrerer Polyestermonomere oder Polyesteroligomere in einer Polykondensationsreaktion in Gegenwart eines Polykondensationskatalysators, um ein Polyesterpolymer mit einer It.V. von 0,50 dL/g bis 1,1 dL/g herzustellen;

einen Verfestigungsschritt, in dem das geschmolzene Polyesterpolymer zu Teilchen verfestigt wird;

einen optionalen Festphasenschritt, bei dem das feste Polymer zu einer It.V. von 0,70 dL/g bis 1,2 dL/g polymerisiert wird; und

einen Teilchenzugabeschritt, umfassend das Zugeben und Dispergieren von Titancarbidteilchen, um eine Menge von 1 ppm bis 500 ppm bereitzustellen, bezogen auf das Gewicht des Polymers, wobei der Teilchenzugabeschritt vor, während oder nach einem der vorhergehenden Schritte erfolgt.

22. Verfahren nach Anspruch 21, wobei das Verfahren ferner einen Formschritt umfasst, der dem Schritt des Festphasenschritts folgt, wobei der Formschritt das Schmelzen und Extrudieren des resultierenden festen Polymers umfasst, um einen geformten Gegenstand zu erhalten, in dem die Titancarbidteilchen dispergiert sind.

23. Verfahren nach Anspruch 22, wobei der Teilchenzugabeschritt während oder nach dem Festphasenschritt und vor dem Formschritt stattfindet.

**24.** Verfahren nach Anspruch 21, wobei der Teilchenzugabeschritt das Zugeben der Titancarbidteilchen als ein thermoplastisches Konzentrat vor oder während des Formschrittes umfasst, wobei das thermoplastische Konzentrat die Titancarbidteilchen in einer Menge von 100 ppm bis 5000 ppm umfasst, bezogen auf das Gewicht des thermoplastischen Konzentrats.

**25.** Verfahren nach Anspruch 21, wobei die Titancarbidteilchen eine mittlere Teilchengröße von 0,005 $\mu$m bis 100 $\mu$m aufweisen.

**26.** Verfahren nach Anspruch 21, wobei der Teilchenzugabeschritt vor oder während des Polykondensationsschritts durchgeführt wird.

**27.** Verfahren nach Anspruch 21, wobei der Teilchenzugabeschritt vor oder während des Verfestigungsschritts durchgeführt wird.

**28.** Verfahren nach Anspruch 21, wobei der Teilchenzugabeschritt vor oder während des Festphasenschritts durchgeführt wird.

**29.** Verfahren nach Anspruch 22, wobei der Teilchenzugabeschritt vor oder während des Formschritts durchgeführt wird.

**30.** Verfahren nach Anspruch 21, wobei die Dicarbonsäure Terephthalsäure umfasst.

**31.** Verfahren nach Anspruch 21, wobei der Dicarbonsäurediester Dimethylterephthalat umfasst.

**32.** Verfahren nach Anspruch 21, wobei das Diol Ethylenglykol umfasst.

**33.** Verfahren nach Anspruch 21, wobei die Dicarbonsäure Naphthalindicarbonsäure umfasst.

**34.** Verfahren nach Anspruch 21, wobei die Dicarbonsäure eine aromatische Dicarbonsäure umfasst.

**35.** Verfahren nach Anspruch 24, wobei das thermoplastische Konzentrat umfasst:

Titancarbidteilchen in einer Menge im Bereich von 0,15 Gew.-% bis 35 Gew.-%, bezogen auf das Gewicht des thermoplastischen Konzentrats; und
ein thermoplastisches Polymer in einer Menge von mindestens 65 Gew.-%, bezogen auf das Gewicht des thermoplastischen Konzentrats.

**36.** Verfahren nach Anspruch 35, wobei das thermoplastische Polymer einen oder mehrere der folgenden Bestandteile umfasst: einen Polyester, ein Polyolefin oder ein Polycarbonat.

**Revendications**

**1.** Composition de polyester ayant un réchauffage amélioré, comprenant :

un polymère de polyester ; et
des particules de carbure de titane, ayant une granulométrie médiane de 0,005 à 100 $\mu$m, dispersées dans le polymère de polyester en une quantité de 0,5 à 1 000 ppm, par rapport au poids total de la composition de polyester.

**2.** Composition de polyester selon la revendication 1, dans laquelle les particules de carbure de titane ont une granulométrie médiane de 0,01 à 10 $\mu$m.

**3.** Composition de polyester selon la revendication 1, dans laquelle les particules de carbure de titane ont une granulométrie médiane de 0,01 à 5 $\mu$m.

**4.** Composition de polyester selon la revendication 1, dans laquelle les particules de carbure de titane sont présentes en une quantité de 1 à 500 ppm, par rapport au poids total de la composition de polyester.

**5.** Composition de polyester selon la revendication 1, dans laquelle les particules de carbure de titane sont présentes en une quantité de 5 à 50 ppm, par rapport au poids total de la composition de polyester.

**6.** Composition de polyester selon la revendication 1, dans laquelle le polymère de polyester comprend du polyéthylène téréphtalate.

**7.** Composition de polyester selon la revendication 1, dans laquelle la composition de polyester est sous la forme d'une préforme de bouteille de boisson.

**8.** Composition de polyester selon la revendication 1, dans laquelle la composition de polyester est sous la forme d'une bouteille de boisson.

**9.** Composition de polyester selon la revendication 1, dans laquelle la composition de polyester est sous la forme d'un article moulé.

**10.** Composition de polyester selon la revendication 1, dans laquelle le polymère de polyester comprend une phase continue, et dans laquelle les particules de carbure de titane sont dispersées dans la phase continue.

**11.** Composition de polyester selon la revendication 1, dans laquelle les particules de carbure de titane ont une granulométrie médiane de 0,01 à 10 $\mu$m, et permettent d'obtenir une composition de polyester ayant une température d'amélioration du réchauffage (RIT) d'au moins 5 °C tout en conservant une valeur L* de préforme de 70 ou plus.

**12.** Composition de polyester selon la revendication 1, dans laquelle les particules de carbure de titane comprennent des particules revêtues de carbure de titane.

**13.** Composition de polyester selon la revendication 1, dans laquelle les particules de carbure de titane comprennent des sphères creuses constituées de carbure de titane.

**14.** Composition de polyester selon la revendication 1, dans laquelle les particules de carbure de titane comprennent un carbure de titane de formule $TiC_{0,47}$ à $TiC_{1,0}$.

**15.** Composition de polyester selon la revendication 1, dans laquelle les particules de carbure de titane comprennent du carbure de titane en une quantité d'au moins 90 % en poids, par rapport au poids total des particules de carbure de titane.

**16.** Composition de polyester selon la revendication 15, dans laquelle les particules de carbure de titane comprennent en outre du nitrure de titane.

**17.** Composition de polyester selon la revendication 15, dans laquelle les particules de carbure de titane comprennent en outre du titane élémentaire.

**18.** Composition de polyester selon la revendication 1, dans laquelle les particules de carbure de titane ont une distribution granulométrique dont la répartition (S) est de 0 à 10.

**19.** Composition de polyester selon la revendication 1, dans laquelle les particules de carbure de titane ont une distribution granulométrique dont la répartition (S) est de 0,01 à 2.

**20.** Composition de polyester selon la revendication 1, comprenant :

un polymère de polyester dans lequel les résidus poly(éthylène téréphtalate) représentent au moins 90 % en poids du polymère de polyester ; et
des particules de carbure de titane, ayant une granulométrie médiane de 0,01 à 10 $\mu$m, dispersées aléatoirement dans le polymère de polyester en une quantité de 1 à 50 ppm, où la composition de polyester a une température d'amélioration du réchauffage de 5 °C ou plus et une valeur L* de préforme de 70 ou plus.

**21.** Procédé de production d'une composition de polyester selon la revendication 1, ledit procédé comprenant :

une étape d'estérification comprenant la transestérification d'un diester d'acide dicarboxylique avec un diol, ou directement l'estérification d'un acide dicarboxylique avec un diol, pour obtenir un monomère de polyester et/ou un oligomère de polyester ou plus ;

une étape de polycondensation comprenant la réaction du monomère de polyester et/ou de l'oligomère de polyester ou plus dans une réaction de polycondensation en présence d'un catalyseur de polycondensation pour obtenir un polymère de polyester ayant une valeur It. V. de 0,50 à 1,1 dL/g ;

une étape de formation de particules dans laquelle le polymère de polyester à l'état fondu est solidifié sous forme de particules ;

une étape de réticulation facultative dans laquelle le polymère solide est polymérisé à une valeur It. V. de 0,70 à 1,2 dL/g ; et

une étape d'ajout de particules comprenant l'ajout et la dispersion des particules de carbure de titane pour obtenir une quantité de 1 à 500 ppm en poids de polymère, où l'étape d'ajout de particules intervient avant, pendant, ou après l'une quelconque des étapes précédentes.

22. Procédé selon la revendication 21, dans lequel le procédé comprend en outre une étape de façonnage, après l'étape de réticulation, l'étape de façonnage comprenant la fusion et l'extrusion du polymère solide obtenu pour obtenir un article façonné contenant les particules de carbure de titane à l'état dispersé.

23. Procédé selon la revendication 22, dans lequel l'étape d'ajout de particules intervient pendant ou après l'étape de réticulation et avant l'étape de façonnage.

24. Procédé selon la revendication 21, dans lequel l'étape d'ajout de particules comprend l'ajout des particules de carbure de titane sous forme de concentré de matière thermoplastique avant ou pendant l'étape de façonnage, le concentré de matière thermoplastique comprenant les particules de carbure de titane en une quantité de 100 à 5 000 ppm, par rapport au poids du concentré de matière thermoplastique.

25. Procédé selon la revendication 21, dans lequel les particules de carbure de titane ont une granulométrie médiane de 0,005 à 100 $\mu$m.

26. Procédé selon la revendication 21, dans lequel l'étape d'ajout de particules intervient avant ou pendant l'étape de polycondensation.

27. Procédé selon la revendication 21, dans lequel l'étape d'ajout de particules intervient avant ou pendant l'étape de formation de particules.

28. Procédé selon la revendication 21, dans lequel l'étape d'ajout de particules intervient avant ou pendant l'étape de réticulation.

29. Procédé selon la revendication 22, dans lequel l'étape d'ajout de particules intervient avant ou pendant l'étape de façonnage.

30. Procédé selon la revendication 21, dans lequel l'acide dicarboxylique comprend l'acide téréphtalique.

31. Procédé selon la revendication 21, dans lequel le diester d'acide dicarboxylique comprend le diméthyl-téréphtalate.

32. Procédé selon la revendication 21, dans lequel le diol comprend l'éthylène glycol.

33. Procédé selon la revendication 21, dans lequel l'acide dicarboxylique comprend l'acide naphtalène dicarboxylique.

34. Procédé selon la revendication 21, dans lequel l'acide dicarboxylique comprend un acide dicarboxylique aromatique.

35. Procédé selon la revendication 24, dans lequel le concentré de matière thermoplastique comprend :

des particules de carbure de titane, en une quantité dans la plage de 0,15 jusqu'à 35 % en poids sur la base du poids du concentré de matière plastique ; et

un polymère thermoplastique, en une quantité d'au moins 65 % en poids, sur la base du poids du concentré de matière thermoplastique.

36. Procédé selon la revendication 35, dans lequel le polymère thermoplastique comprend un ou plusieurs polymères thermoplastiques parmi : un polyester, une polyoléfine, ou un polycarbonate.

Fig. 1

Fig. 2

Fig. 3

Measured TiC concentration in CM01 (ppm)

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3733309 A
- WO 9603163 A
- JP 6215618 A
- JP 63237207 A
- US 6197851 B
- US 4617374 A

**Non-patent literature cited in the description**

- **KIRK-OTHMER.** Encyclopedia of Chemical Technology. 1997, vol. 24, 225-349
- **KIRK-OTHMER.** Encyclopedia of Chemical Technology. 1997, vol. 24, 186-224
- **KIRK-OTHMER.** Encyclopedia of Chemical Technology. 1995, vol. 16, 353-392
- Size Measurement of Particles. **KIRK-OTHMER.** Encyclopedia of Chemical Technology. 1997, vol. 22, 256-278
- **FRED W. BILLMEYER, JR.** Principles of Color Technology. John Wiley & Sons, 1981, 25-66